# EUROPEAN PATENT APPLICATION

(11) **EP 4 272 871 A1**
(43) Date of publication of application: **08.11.2023**
(21) Application number: 22171110.4
(22) Date of filing: 02.05.2022
(51) Int. Cl.: B04B 9/06, B04B 5/12

(54) **A CENTRIFUGAL SEPARATOR COMPRISING A TURBINE CASING**

(71) Applicant: Alfdex AB, 261 24 Landskrona (SE)
(72) Inventor: ANDERSSON AGINGER, Thomas, SE-127 42 SKÄRHOLMEN (SE); NYBERG, Cédric, SE-147 63 UTTRAN (SE); HAGBERG, Mikael, SE-127 38 SKÄRHOLMEN (SE)
(74) Representative: Alfa Laval Attorneys

(57) **Abstract**

The present invention provides a centrifugal separator (1) for cleaning gas containing contaminants. The separator comprises a stationary casing (2), enclosing a separation space (3) through which a gas flow is permitted, a gas inlet (20) extending through the stationary casing (2) and permitting supply of the gas to be cleaned, a rotating member (7) comprising a plurality of separation members (9) arranged in said separation space (3) and being arranged to rotate around an axis (X) of rotation. The separator further comprises a gas outlet (28) arranged in the stationary casing (2) and configured to permit discharge of cleaned gas and comprising an outlet opening through a wall of the stationary casing (2), a drainage outlet (29) arranged in the stationary casing (2) and configured to permit discharge of liquid contaminants separated from the gas to be cleaned. Further, the separator comprises a turbine casing (30) in which a turbine wheel (22) that is drivingly connected to the rotating member (7) is arranged; a nozzle (24) arranged for directing a jet of pressurized liquid towards the turbine wheel (22), thereby rotating said turbine wheel (22), wherein the turbine casing (30) further comprises a turbine outlet (25) for drainage of the liquid used for rotating said turbine wheel (22), and further wherein the turbine casing (30) has a geometry such that the liquid used for rotating said turbine wheel (22) is leaving said turbine outlet with a remaining kinetic energy that is higher than the energy obtained from gravity alone.

## Description

### Field of the Invention

The present invention relates to the field of centrifugal separators for cleaning a gas containing liquid contaminants. In particular, the present invention relates to a separator for cleaning crankcase gases of a combustion engine from oil particles.

### Background of the Invention

It is well known that a mixture of fluids having different densities may be separated from one another through use of a centrifugal separator. One specific use of such a separator is in the separation of oil from gas vented from a crankcase forming part of an internal combustion engine.

With regard to this specific use of separators, there can be a tendency for the high-pressure gas found in the combustion chambers of an internal combustion engine to leak past the associated piston rings and into the crankcase of the engine. This continuous leaking of gas into the crankcase can lead to an undesirable increase of pressure within the crankcase and, as a consequence, to a need to vent gas from the casing. Such gas vented from the crankcase typically carries a quantity of engine oil (as droplets or a fine mist), which is picked up from the reservoir of oil held in the crankcase.

In order to allow vented gas to be introduced into the inlet system without also introducing unwanted oil (particularly into a turbocharging system wherein the efficiency of the compressor can be adversely affected by the presence of oil), it is necessary to clean the vented gas (i.e. to remove the oil carried by the gas) prior to the gas being introduced into the inlet system. This cleaning process may be undertaken by a centrifugal separator, which is mounted on or adjacent the crankcase and which directs cleaned gas to the inlet system and directs separated oil back to the crankcase. An example of such a separator is disclosed e.g. in US 8,657,908.

The rotational motion of such a centrifugal separator may be performed by a drive arrangement comprising an impulse turbine drivingly connected to the centrifugal rotor and a nozzle for a pressurized fluid. The impulse turbine is arranged with buckets for receiving a jet of pressurized fluid, such as oil, from the nozzle directed against the buckets, e.g. as disclosed in EP2522431. However, if the separator is inclined during use - e.g. if the gas separator is used for cleaning crankcase gas from a vehicle driving uphill - oil used for driving the impulse turbine may be difficult to drain from the turbine casing, thereby leading to a decreased performance of the drive arrangement. Thus, there is a need in the art to improve the drive arrangements during inclination of the centrifugal separator.

### Summary of the Invention

It is an object of the invention to at least partly overcome one or more limitations of the prior art. In particular, it is an object to provide a centrifugal separator for cleaning crankcase gas that operates efficiently even at inclination of the separator.

As a first aspect of the invention, there is provided centrifugal separator for cleaning gas containing contaminants; separator comprising
a stationary casing, enclosing a separation space through which a gas flow is permitted,
a gas inlet extending through the stationary casing and permitting supply of the gas to be cleaned,
a rotating member comprising a plurality of separation members arranged in separation space and being arranged to rotate around an axis (X) of rotation,
a gas outlet arranged in the stationary casing and configured to permit discharge of cleaned gas and comprising an outlet opening through a wall of the stationary casing,
a drainage outlet arranged in the stationary casing and configured to permit discharge of liquid contaminants separated from the gas to be cleaned;
a turbine casing in which a turbine wheel that is drivingly connected to the rotating member is arranged;
a nozzle arranged for directing a jet of pressurized liquid towards the turbine wheel, thereby rotating turbine wheel,
wherein the turbine casing further comprises a turbine outlet for drainage of the liquid used for rotating turbine wheel, and
wherein the turbine casing has a geometry such that the liquid used for rotating turbine wheel is leaving turbine outlet with a remaining kinetic energy that is higher than the energy obtained from gravity alone.

As used herein, the term "axially" denotes a direction which is parallel to the rotational axis (X). Accordingly, relative terms such as "above", "upper", "top", "below", "lower", and "bottom" refer to relative positions along the rotational axis (X). Correspondingly, the term "radially" denotes a direction extending radially from the rotational axis (X). A "radially inner position" thus refers to a position closer to the rotational axis (X) compared to "a radially outer position".

An axial plane refers to a plane having a normal extending perpendicular to the axis of rotation (X). A radial plane refers to a plane having a normal extending parallel to the axis of rotation (X).

The first aspect of the invention is based on the insight that if the turbine casing, which thus function as a drive chamber, is designed such that liquid leaves the chamber with high speed, then it aids in draining the turbine casing even at inclination of the whole separator. Thus, according to the invention, the remaining kinetic energy of the liquid used to drive the turbine wheel is used to drain the casing. During inclination of the centrifugal separator, a pool of liquid, such as oil, used to drive the turbine may be formed within the turbine casing. If the liquid level of the pool reaches the turbine wheel, it seriously decreases the speed of the turbine. According to the present design of the turbine casing, enough liquid may keep its high kinetic energy to spray out of the turbine casing, and also aid in draining the turbine casing of any "slower" liquid therein.

The feature of the "turbine casing has a geometry such that the liquid used for rotating turbine wheel is leaving turbine outlet with a remaining kinetic energy that is higher than the energy obtained from gravity alone" may thus refer to the turbine casing having a geometry such that the liquid used to drive the turbine wheel retains enough kinetic energy to drain the turbine casing from any pool of liquid formed by gravity.

The drained liquid may thus spray out of the turbine casing. Further, reusing this kinetic energy of the liquid provides for a small turbine casing.

The contaminants in the gas may comprise liquid contaminants, such as oil, and soot.

Consequently, the centrifugal separator may be for separating liquid contaminants, such as oil, from gas. The gas may be crankcase gas of a combustion engine. However, the centrifugal separator may also be suitable for cleaning gases from other sources, for instance the environment of machine tools which frequently contains large amounts of liquid contaminants in the form of oil droplets or oil mist.

The stationary casing of the centrifugal separator may comprise a surrounding side wall, and first and second end walls, which enclose the separation space. The stationary casing may have a cylindrical shape with circular cross-section having a radius R from the axis (X) of rotation to the surrounding side wall. This radius R may be constant at least with respect to a major part of the circumference of the surrounding side wall. The first and second end walls may thus form an upper end wall and a lower end wall of the cylindrical shaped casing. The stationary casing may also be slightly conical.

The gas inlet of the centrifugal separator may be arranged through the first end wall or through the surrounding side wall close to the first end wall, thus at the top of the separator, such that gas entering through the gas inlet is directed to the separation space. The downstream portion of the gas inlet may be centred around the axis of rotation (X). The gas inlet may further comprise upstream portion in the form of an inlet conduit. This conduit may extend radially or axially from the centrifugal separator.

The drainage outlet is usually arranged in the lower portion of the stationary casing, such as arranged in the second end wall. Thus, the drainage outlet may be arranged centrally in an end wall opposite the end wall through which, or at which, the inlet is arranged. The drainage outlet of the centrifugal separator may further be formed by several spot shaped through holes of the stationary casing or by a single drainage passage. The drainage outlet may be arranged at the axis of rotation or centred around the axis of rotation. The drainage outlet may also be in an annular collection groove at the inner end wall of the stationary casing.

The gas outlet may be in the form of a gas conduit in through a wall of the stationary casing, such as in a lower portion of the surrounding side wall of the stationary casing. However, the gas outlet may also be arranged an upper portion of the stationary casing.

The rotating member is arranged for rotation during operation by means of the turbine wheel. The rotating member comprises a plurality of separation members arranged in the separation space. The separation members of the rotating member are examples of surface-enlarging inserts that promote separation of contaminants from the gas.

In embodiments of the first aspect, the plurality of separation members is a stack of separation discs.

The separation discs of the stack may be frustoconical. A frustoconical disc may have a planar portion extending in a plane that is perpendicular to the axis of rotation, and a frustoconical portion that may extend upwards or downwards. The planar portion may be closer to the rotational axis than the frustoconical portion. Further, the discs of the stack may be radial discs, in which substantially the whole disc extends in a plane that is perpendicular to the axis of rotation.

It is also to be understood that the separation members, such as separation discs, not necessarily have to be arranged in a stack. The separation space may for example comprise axial discs, or plates that extend around the axis of rotation. The axial discs or plates may be planar, i.e. extending in planes that are parallel to the axis of rotation. The axial discs or plates may also have a slightly or significantly curved shape, such as an arcuate or spiral shape, as seen in a radial plane.

The rotating member is journaled within the stationary casing by at least one bearing, such as by at least two bearings. Each of the bearings may be retained in an individual bearing holder.

During operation, gas to be cleaned may be directed centrally through the plurality of separation members, such as centrally through the stack of separation discs. In such a set-up, the rotating member may further define a central space formed by at least one through hole in each of the separation members. This central space is connected to the gas inlet and configured to convey the gas to be cleaned from the gas inlet to the interspaces between the separation members, such as between the interspaces between the discs of a stack of separation discs. A separation disc that may be used as separation member may comprise a central, essentially flat portion perpendicular to the axis of rotation. This portion may comprise the through holes that form parts of the central space.

Thus, the centrifugal separator may be configured to lead gas to be cleaned, such as crankcase gases, from the gas inlet into a central portion of the rotating member. In this manner the crankcase gases may be "pumped" from the central portion of the rotating member into the interspaces between the separation discs in the stack of separation discs by the rotation of the rotating member. Thus, the centrifugal separator may work according to the concurrent flow principle, in which the gas flows in the disc stack from a radial inner part to a radial outer part, which is opposite to a separator operating according to the counter-current flow principle, in which the gas is conducted into the centrifugal rotor at the periphery of the rotor and is led towards a central part of the rotor.

The turbine wheel is arranged in a stationary turbine casing and may be rotated by means of an oil jet from the lubrication oil system of the combustion engine or a free jet wheel comprising a blow-back disk. The turbine wheel may comprise a number of buckets onto which the pressurized liquid is directed. The turbine wheel may form an impulse turbine, such as a Pelton turbine. The turbine wheel may further have a rotational axis that is the same as the axis of rotation (X) of the rotating member.

The nozzle arranged for directing a jet of pressurized liquid towards the turbine wheel may be arranged in the turbine casing or as a part of the stationary casing. The pressurized liquid may for example be oil.

The turbine casing is thus stationary and may be arranged below the stationary casing. Further, the drainage outlet of the stationary casing may be arranged such that separated contaminants, such as oil, is drained to the turbine casing. In this way, separated contaminants from the gas may be discharged together with the liquid (e.g. oil) used to drive the turbine wheel.

In embodiments of the first aspect, the turbine casing has a geometry such that the liquid used for rotating turbine wheel is leaving turbine outlet with a remaining kinetic energy that is higher than the energy obtained from gravity alone when liquid is sprayed from the nozzle with a pressure that is above 1 bar, such as between 1-6 bar, such as between 2-5 bar.

Rotating the turbine with liquid exiting the nozzle with a pressure of above 1 bar, such as between 1-6 bar, such as between 2-5 bar may thus mean normal operating conditions for the centrifugal separator and the turbine wheel during cleaning of crankcase gas from an engine of a vehicle. Such pressure of the liquid from the nozzle may lead to a rotational speed of the rotating member of 6000 - 12000 rpm.

In embodiments of the first aspect, the turbine casing comprises a sloped inner surface which is arranged so as to be hit by liquid used for rotating the turbine wheel. "Sloped" may thus mean that it is sloped as seen in an axial plane. Liquid that has impacted the turbine wheel usually splashes against the surrounding inner surface, and on or several of such surrounding inner surfaces may be a sloped inner surface. A sloped inner surface thus aids in preserving kinetic energy of the liquid.

As an example, the sloped inner surface has at least a portion that is at an axial position that overlaps with the axial extension of the turbine wheel. Consequently, the sloped inner surface may be arranged at substantially the same axial level as the turbine wheel, i.e. within the axial extension of the buckets of the turbine wheel

As a further example, the sloped inner surface extends axially outwards and downwards as seen in an axial plane. Thus, the radially outer portion of the sloped inner surface may be at a lower axial level than the radial inner portion.

In embodiments of the first aspect, the turbine casing comprises an inner ditch at the outer periphery of the turbine casing for directing the liquid used for rotating the turbine wheel towards the turbine outlet. Such an inner ditch may further aid in preserving the kinetic energy of the liquid hitting the inner walls of the turbine casing. The inner ditch may be designed to guide the liquid towards the turbine outlet.

As an example, the inner ditch may spiral axially downwards towards the turbine outlet. Such as design may thus aid in guiding the liquid towards the outlet.

As an example, the turbine casing may comprise both a sloped inner surface as discussed above and an inner ditch, and the ditch may be arranged downstream of the sloped inner surface in the path of the liquid from the turbine wheel towards the turbine outlet. The inner ditch may thus be arranged axially below the sloped inner surface.

In embodiments of the first aspect, the turbine casing has a raised bottom surface under at least a major portion of the turbine wheel such that the distance z1 between the bottom surface and the turbine wheel is less than 5 mm, such as less than 3 mm.

The raised bottom surface may aid in preserving the kinetic energy of the liquid used for rotating the turbine wheel by increasing the probability of the liquid staying at the periphery of the rotor casing. As an example, the rotor casing may comprise both in inner ditch as discussed above and a raised bottom surface, and the raised bottom surface may form the radially inner sidewall of the inner ditch. Thus, the inner ditch may be arranged axially below the uppermost part of the raised bottom surface.

In embodiments of the first aspect, the inner diameter of the turbine casing is d1 and the diameter of the turbine wheel is d2, and wherein the relation between d1 and d2 is 0.3 d1 > d2 < 0.7 d1. Thus, the diameter of the turbine wheel d2 may be about 30-70% of the inner diameter of the turbine casing d1. As an example, d2 may be about 0.5 d1. ?

Such a relation generally means a quite small inner volume of the turbine casing. A small inner volume of the turbine casing may aid in preserving kinetic energy of the liquid used to rotate the turbine wheel.

In embodiments of the first aspect, the centre c1 of the inner area of the turbine casing is offset from the centre c2 of the turbine wheel, as seen in a radial plane.

This means that the turbine wheel is not centred in the turbine casing but instead shifted radially towards one side. This may be advantageous in that it provides for a spiral shaped route for the liquid used to drive the turbine wheel when leaving the turbine casing. This may in turn lead to less splashing of the liquid in the turbine casing, thereby facilitating liquid leaving the turbine casing with a high velocity/kinetic energy.

The centre of the turbine wheel may thus form the axis of rotation (X), and the turbine casing may have a centre that is not aligned with the axis of rotation (X).

In embodiments of the first aspect, the turbine outlet is arranged for draining the liquid in a radial direction.

Also the nozzle arranged for directing the jet of pressurized liquid may be arranged in the radial direction so that the pressurized liquid is jetted in the radial direction.

However in alternative embodiments, the turbine outlet may be arranged for draining the liquid axially downwards.

In embodiments of the first aspect, the nozzle and turbine outlet are arranged such that pressurized liquid enters the inner volume of the turbine casing via the nozzle in a first direction (Dᵢₙ) and leaves the inner volume of the turbine casing via the liquid outlet in a second direction (Dₒᵤₜ), and wherein the angle between the first and second direction is at least 90 degrees, as seen in the radial plane.

The liquid leaving the turbine wheel may be very scattered. Having a certain length for the liquid against the wall, i.e. if the angle between the first and second direction is at least 90 degrees, as seen in the radial plane, may provide for gathering and collecting all scattered liquid against the inner wall before leaving the turbine casing via the turbine outlet. The first and second directions may be in the same plane. Thus, the rotor casing may be designed such that liquid used to drive the turbine wheel makes at least a 90 degree turn from nozzle to outlet. As an example, the angle between the first and second direction may be at least 120 degrees, such as at least 150 degrees, as seen in the radial plane

As second aspect of the invention, there is provided a method for cleaning gas containing contaminants, the method comprising
- guiding gas containing contaminants to a centrifugal separator according to the first aspect during rotation of the rotating member,
- discharging cleaned gas from the gas outlet, and
- discharging contaminants from the drainage outlet

The contaminants in the gas may comprise liquid contaminants, such as oil, and soot.

This aspect may generally present the same or corresponding advantages as the former aspects. Effects and features of the second aspect are largely analogous to those described above in connection with the first aspect. Embodiments mentioned in relation to the first aspect are largely compatible with the second aspect.

### Brief description of the Drawings

The above, as well as additional objects, features and advantages of the present inventive concept, will be better understood through the following illustrative and non-limiting detailed description, with reference to the appended drawings. In the drawings like reference numerals will be used for like elements unless stated otherwise.
Figure 1 shows a schematic drawing of the cross-section of an embodiment of a centrifugal separator for cleaning gas.
Figures 2a and 2b show a close-up view of a section of the rotor casing of the centrifugal separator of Fig. 1.
Figure 3a-3c show sections of the rotor casing as seen in a radial plane.

### Detailed Description

The centrifugal separator according to the present disclosure will be further illustrated by the following description with reference to the accompanying drawings.

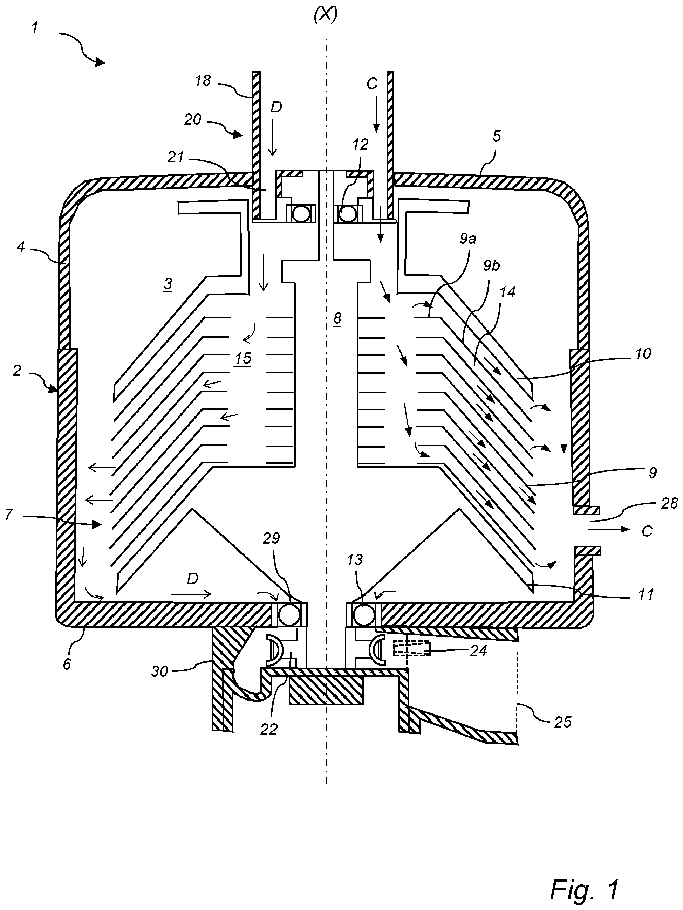

Fig. 1 shows a cross-section of a centrifugal separator 1 according to the present disclosure. The centrifugal separator 1 comprises a stationary casing 2, which is configured to be mounted to a combustion engine (not disclosed), especially a diesel engine, at a suitable position, such as on top of the combustion engine or at the side of the combustion engine.

It is to be noted that the centrifugal separator 1 is also suitable for cleaning gases from other sources than combustion engines, for instance the environment of machine tools which frequently contains large amounts of liquid contaminants in the form of oil droplets or oil mist.

The stationary casing 2 encloses a separation space 3 through which a gas flow is permitted. The stationary casing 2 comprises, or is formed by, a surrounding side wall 4, an upper end wall 5 and a lower end wall 6.

The centrifugal separator further comprises a rotating member 7, which is arranged to rotate around an axis (X) of rotation. It should be noted that the stationary casing 2 is stationary in relation to the rotating member 7, and preferably in relation to the combustion engine to which it may be mounted.

The stationary casing 2 has a radius from the axis (X) of rotation to the surrounding side wall 4 that is constant at least with respect to a major part of the circumference of the surrounding side wall 4. The surrounding side wall 4 thus has a circular, or substantially, circular cross-section.

The rotating member 7 comprises a rotatable shaft, i.e. spindle 8 and a stack of separation discs 9 attached to the spindle 8. All the separation discs of the stack 9 are provided between a top disc 10 and a lower end plate 11. The spindle 8, and thus the rotating member 7, is rotatably supported in the stationary casing 2 by means of an upper bearing 12 and a lower bearing 13, the bearings being arranged one on each axial side of the stack of separation discs 9.

The separation discs of the disc stack 9 are frusto-conical and extend outwardly and downwardly from the spindle 8. The separation discs thus comprise an inner flat portion 9a, which extend perpendicularly to the axis of rotation (X), and a conical portion 9b, that extend outwardly and downwardly from the flat portion 9a. It should be noted that the separation discs also could extend outwardly and upwardly, or even radially.

The separation discs of the stack 9 are provided at a distance from each other by means of distance members (not disclosed) in order to form interspaces 14 between adjacent separation discs 9, i.e. an interspace 14 between each pair of adjacent separation discs 9. The axial thickness of each interspace 14 may e.g. be in the order of 0.5 -2 mm, such as 1-2 mm.

The separation discs of the stack 9 may be made of plastic or metal. The number of separation discs in the stack 9 is normally higher than indicated in Fig. 1 and may be for instance 50 to 100 separation discs 9 depending on the size of the centrifugal separator.

The rotating member 7 further defines a central space 15. The central space 15 is formed by a through hole in each of the separation discs 9. In the embodiments of Fig. 1, the central space 15 is formed by a plurality of through holes, each extending through the top disc 10 and through each of the separation discs 9, but not through the lower end plate 11. The through holes are arranged in the flat portions 9a of the separation discs.

The gas inlet 20 is for the supply of the gas to be cleaned. The gas inlet 20 extends through the stationary casing 2, and more precisely through upper end wall 5. The gas inlet 20 is formed by the axially extending inlet conduit 18 and through channels 21, which are arranged radially outside the upper bearing 12 and through which the inlet conduit 18 communicates with central space 15.

The gas inlet 20 communicates with the central space 15 so that the gas to be cleaned is conveyed from the inlet 20 via the central space 15 to the interspaces 14 of the stack of separation discs 9. The gas inlet 20 is thus configured to communicate with the crankcase of the combustion engine, or any other source, via the inlet conduit 18, thereby permitting the supply of crankcase gas from the crankcase to the centrifugal separator 1.

The gas outlet 28 of the centrifugal separator 1 is in this example arranged in the lower portion of the stationary casing 2 and is configured to permit discharge of cleaned gas. The gas outlet 28 comprises an outlet conduit through the surrounding side wall 4 of the stationary casing 2. However, the gas outlet 28 could also be arranged in an upper portion of the stationary casing 2, such as in the upper end wall 5.

The centrifugal separator 1 comprises a drainage outlet 29 arranged in the lower portion of the stationary casing 2 and configured to permit discharge of liquid contaminants separated from the gas. The drainage outlet 29 is in this embodiment in the form of through holes arranged in the lower end wall 6 so that separated liquid contaminants flow through the lower bearing 13 as they are drained from the separation space 3 to the turbine casing 30.

The turbine casing comprises turbine wheel 22, which is drivingly connected to the rotating member, and a nozzle 24 arranged for directing a jet of pressurized oil towards the turbine wheel 22, thereby rotating the turbine wheel 22 and the rotating member 7 with its disc stack 9. The oil nozzle arranged for being connected to an engine oil circuit of an internal combustion engine.

The turbine casing 30 further comprises a turbine outlet 25 for drainage of the oil used for rotating the turbine wheel 22. Also the separated impurities from the separation space 3, e.g. oil that has been drained from the separation space via drainage outlet 29, is led to the turbine outlet 25. Oil drained from turbine outlet 25 may be led back to the engine oil circuit of an internal combustion engine.

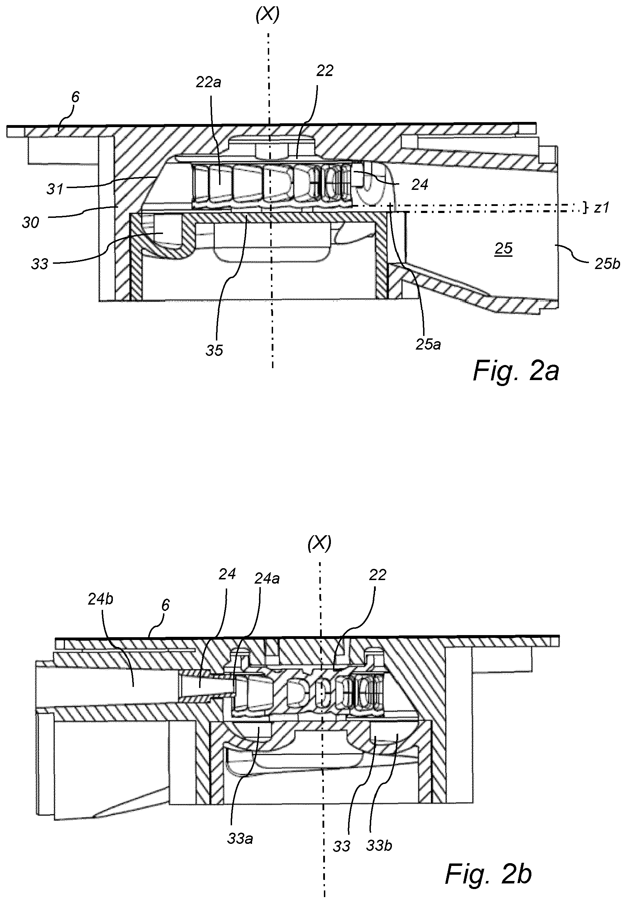

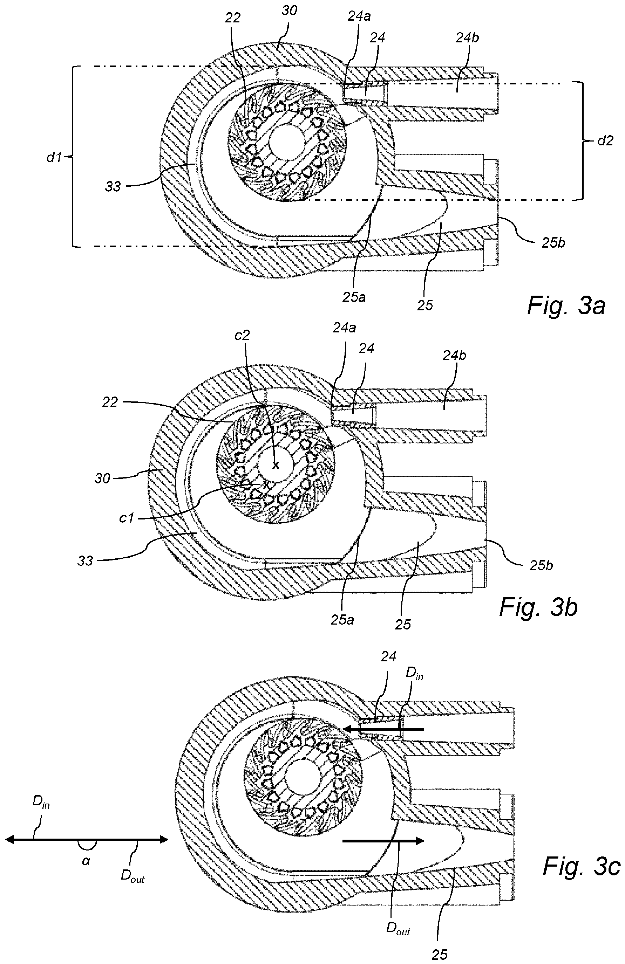

Moreover, the turbine casing 30 has a geometry such that the oil used for rotating the turbine wheel 22 is leaving the turbine outlet with a remaining kinetic energy that is higher than the energy obtained from gravity alone. The turbine casing 30 will be discussed in further detail in relation to Figs. 2 and 3.

During operation of the centrifugal separator as shown in Fig. 1, the rotating member 7 is kept in rotation by the oil nozzle 24 supplying oil against the wheel 22. As an example, the rotational speed may be in the range of 6.000 - 14.000 rpm, such as between 7.500-12.000 rpm. Contaminated gas, e.g. crankcase gas from the crankcase of an internal combustion engine, is supplied to the gas inlet 20 via conduit 18. This gas is conducted further into the central space 15 and from there into and through the interspaces 14 between the separation discs of the stack 9. As a consequence of the rotation of the rotating member 7, the gas is brought to rotate, whereby it is pumped further on, radially and outwardly, through the gaps or interspaces 14. During the rotation of the gas in the interspaces 14, solid or liquid particles such as oil suspended in the gas are separated therefrom. The particles settle on the insides of the conical portions 9b of the separation discs and slide after that radially outwardly thereon. When the particles and/or liquid drops have reached out to the radial outer edges of the separation discs 9, they are thrown away from the rotating member 7 to hit the inner surface of the surrounding side wall 4. Separated oil particles may form a film on the inner surface of the stationary casing 2. From there, oil may be pulled by gravity downwardly to bottom end wall 6 and then and leave the separation space 3 through the drainage outlet 29. The path of the contaminants in the gas is schematically illustrated by arrows "D" in Fig. 1. Cleaned gas freed from particles and exiting from the stack of separation discs 9 leaves the stationary casing 2 through the gas outlet 28. The path of the gas through the centrifugal separator 1 is schematically shown by arrows "C" in Fig. 1.

Figures 2a and 2b show the turbine casing 30 in more detail. Both Figures show a cross-section of the turbine casing in the axial plane but from different directions.

The shown nozzle 24 is arranged in a wall member of the turbine casing 30. The nozzle 30 is connected via a conduit 24b inside the wall member to e.g. a lubricating oil pump of the combustion engine.

Hence, while the engine is running, the lubricating oil pump delivers pressurized oil for the nozzle 24 to rotate the turbine wheel 22 and the rotating member 7. In other embodiments, the fluid pressure source of the combustion engine is a water pump which is drivingly connected to the combustion engine. Accordingly, the fluid for driving the turbine wheel 22 may also be water, which is pressurized by the water pump.

The turbine wheel 22 functions as an impulse turbine and may be arranged with a central through-hole for connection to the shaft 8 of the centrifugal separator 1. The turbine wheel 22 forms a Pelton wheel having a plurality of buckets 22a evenly spaced along the circumference. The turbine wheel 22 may be as disclosed in EP2522431. Thus, the buckets 22a of the turbine wheel 22 may preferably be configured with an inner curved part for reversing the fluid along the height of the bucket 22a.

The nozzle 24 is disposed in close vicinity of the buckets 22a with its nozzle opening 24a directed against the buckets 22a in a tangential direction relative to the turbine wheel 22. This can also be seen in Figs. 3a-c, showing a cross-section of the turbine casing 20 in the radial plane. As an example, the opening 24a of the nozzle 24 is arranged at a distance of 0.5-5 mm from the turbine wheel 22. The oil jet speed from the nozzle 24 may typically range from 20 m/s to 30 m/s during normal operation of a combustion engine. Furthermore, the diameter of the nozzle opening 24a may for instance range from 2.1 mm to 2.9 mm.

The oil jet speed may be at least 2 times the tangential speed of the turbine wheel in operation. As previously mentioned, the rotational speed of the rotating member 7 will typically range from 6 000 to 14 000 rpm when the pressurized oil is delivered with a pressure of 2-5 bars.

The upper portion of the turbine wheel may form part of a labyrinth seal (not shown). When the turbine wheel 22 is in rotation, the separated contaminants from the drainage outlet 29 of the stationary casing 2 will flow through the second bearing 13 and through such labyrinth seal into turbine casing 30.

As previously mentioned, turbine casing 30 has a geometry such that the oil used for rotating the turbine wheel 22 is leaving the turbine outlet 25 with a remaining kinetic energy that is higher than the energy obtained from gravity alone. This may be during normal operating conditions, such that when oil is sprayed from the nozzle with a pressure that is about 2-5 bar.

The turbine casing may have different geometries for achieving such an effect. As seen in Figs. 2a and 2b, the turbine casing 30 comprises for this purpose a sloped inner surface 31 which is arranged in the turbine casing such that it is hit by the oil after it has impacted the turbine wheel 22. The sloped inner surface 31 is arranged approximately at the same axial position as the turbine wheel, i.e. it has at least a portion that is at an axial position that overlaps with the axial extension of the turbine wheel 22 The turbine casing 30 further has an inner ditch 33 at the outer periphery of the turbine casing 33. Since the sloped inner surface 31 extends axially outwards and downwards as seen in the axial plane, it aids in directing the oil down into this ditch 33. The ditch is further arranged within the turbine casing 30 to direct the oil towards the turbine outlet 25. Further, as also seen in all of Figs. 3a-c, the turbine outlet 25 is arranged for draining the liquid in a radial direction. The turbine outlet 25 forms a channel that has its inner opening 25a towards the interior of the turbine casing 30 and its outer opening 25b towards the exterior of the turbine casing. This is more clearly illustrated in Fig. 3a. The inner opening 25b may extend axially to a position that is below the nozzle 24 and the turbine wheel 22, and the inner ditch 33 may spiral axially downwards along the outer periphery of the inner volume of the turbine casing 30 towards the inner opening 25a of the turbine outlet 25. This is illustrated in Fi. 2b, in which the inner ditch 33 is spirals from an axially higher position 33a (to the left of the turbine wheel 22) to an axially lower position 33b (to the right of the turbine wheel 22).

To further facilitate the preserving of the kinetic energy of the oil within the turbine casing 30, and transport within the ditch 33, the turbine casing 30 has a raised bottom surface 35 (see Fig. 2a) under at least a major portion of the turbine wheel 22. The raised bottom surface of the turbine casing 30 may be arranged such that the distance z1 between the bottom surface 35 and the turbine wheel 22 is less than 3 mm.

Figures 3a-3c show a cross-section of the turbine casing 30 in the radial plane. Compared to prior art solutions, the turbine casing 30 is rather small. This further facilitates for preserving the kinetic energy of the oil used for driving the turbine wheel, i.e. such that the oil can be sprayed out from the turbine outlet 25. As seen in Fig. 3a, the inner diameter of the turbine casing is d1 and the diameter of the turbine wheel is d2, and the relation between d1 and d2 is such that d2 is about 0.5 d1. As an example, the turbine wheel 22 may have a diameter d2 of about 20-40 mm.

Furthermore, as illustrated in Fig. 3b, the centre c1 of the inner area of the turbine casing 30 is offset from the centre c2 of the turbine wheel 22, as seen in a radial plane. Thus, the centre c1 of the turbine casing is not aligned with the axis of rotation, which instead is formed by the centre d2 of the turbine wheel 22. Thus, the turbine wheel 22 is positioned such that it is closer to the nozzle 24 than to the inner opening 25a of the turbine outlet 35

As seen in Fig. 3c, the nozzle 24 and turbine outlet 25 are arranged such that pressurized liquid enters the inner volume of the turbine casing 30 via the nozzle 24 in a first direction Dᵢₙ and leaves the inner volume of the turbine casing 30 via the liquid outlet 25 in a second direction Dₒᵤₜ. The angle α between the first and second directions may be at least 90 degrees, as seen in the radial plane. In this example, the angle α is 180 degrees, i.e. the oil makes more or less a full 180 degree turn within the stationary casing 30.

The invention is not limited to the embodiment disclosed but may be varied and modified within the scope of the claims set out below. The invention is not limited to the orientation of the axis of rotation (X) disclosed in the figures. The term "centrifugal separator" also comprises centrifugal separators with a substantially horizontally oriented axis of rotation. In the above the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. A centrifugal separator (1) for cleaning gas containing contaminants; said separator comprising
a stationary casing (2), enclosing a separation space (3) through which a gas flow is permitted,
a gas inlet (20) extending through the stationary casing (2) and permitting supply of the gas to be cleaned,
a rotating member (7) comprising a plurality of separation members (9) arranged in said separation space (3) and being arranged to rotate around an axis (X) of rotation
a gas outlet (28) arranged in the stationary casing (2) and configured to permit discharge of cleaned gas and comprising an outlet opening through a wall of the stationary casing (2),
a drainage outlet (29) arranged in the stationary casing (2) and configured to permit discharge of liquid contaminants separated from the gas to be cleaned;
a turbine casing (30) in which a turbine wheel (22) that is drivingly connected to the rotating member (7) is arranged;
a nozzle (24) arranged for directing a jet of pressurized liquid towards the turbine wheel (22), thereby rotating said turbine wheel (22),
wherein the turbine casing (30) further comprises a turbine outlet (25) for drainage of the liquid used for rotating said turbine wheel (22), and
wherein the turbine casing (30) has a geometry such that the liquid used for rotating said turbine wheel (22) is leaving said turbine outlet with a remaining kinetic energy that is higher than the energy obtained from gravity alone.

2. A centrifugal separator (1) according to claim 1, wherein the turbine casing (30) has a geometry such that the liquid used for rotating said turbine wheel (22) is leaving said turbine outlet with a remaining kinetic energy that is higher than the energy obtained from gravity alone when liquid is sprayed from the nozzle with a pressure that is between 1-6 bar.

3. A centrifugal separator (1) according to claim 1 or 2, wherein the turbine casing (30) comprises a sloped inner surface (31) which is arranged so as to be hit by liquid used for rotating the turbine wheel (22).

4. A centrifugal separator (1) according to claim 3, wherein the sloped inner surface (31) has at least a portion that is at an axial position that overlaps with the axial extension of the turbine wheel (22).

5. A centrifugal separator (1) according to claim 3 or 4, wherein the sloped inner surface (31) extends axially outwards and downwards as seen in an axial plane.

6. A centrifugal separator (1) according to any previous claim, wherein the turbine casing (30) comprises an inner ditch (33) at the outer periphery of the turbine casing (33) for directing the liquid used for rotating the turbine wheel (22) towards the turbine outlet (25).

7. A centrifugal separator (1) according to claim 6, wherein the inner ditch (33) spirals axially downwards towards the turbine outlet (25).

8. A centrifugal separator (1) according to any previous claim, wherein the turbine casing (30) has a raised bottom surface (35) under at least a major portion of the turbine wheel (22) such that the distance z1 between the bottom surface (35) and the turbine wheel (22) is less than 3 mm.

9. A centrifugal separator (1) according to any previous claim, wherein the inner diameter of the turbine casing is d1 and the diameter of the turbine wheel is d2, and wherein the relation between d1 and d2 is 0.3 d1 > d2 < 0.7 d1. d2=

10. A centrifugal separator (1) according to any previous claim, wherein the centre c1 of the inner area of the turbine casing (30) is offset from the centre c2 of the turbine wheel (22), as seen in a radial plane.

11. A centrifugal separator (1) according to any previous claim, wherein the turbine outlet (25) is arranged for draining the liquid in a radial direction.

12. A centrifugal separator (1) according to any one of claims 1-10, wherein the turbine outlet (25) is arranged for draining the liquid axially downwards.

13. A centrifugal separator (1) according to any previous claim, wherein the nozzle (24) and turbine outlet (25) are arranged such that pressurized liquid enters the inner volume of the turbine casing (30) via the nozzle (24) in a first direction (Dᵢₙ) and leaves the inner volume of the turbine casing (30) via the liquid outlet (25) in a second direction (Dₒᵤₜ), and wherein the angle (α) between the first (Dᵢₙ) and second (Dₒᵤₜ) direction is at least 90 degrees, as seen in the radial plane.

14. A centrifugal separator (1) according to any previous claim, wherein the plurality of separation members (9) is a stack of separation discs 1

15. A method for cleaning gas containing contaminants, the method comprising
- guiding gas containing contaminants to a centrifugal separator according to any one of claims 1-14 during rotation of the rotating member,
- discharging cleaned gas from the gas outlet, and
- discharging contaminants from the drainage outlet.
